# EUROPÄISCHE PATENTSCHRIFT

(11) **EP 2 649 354 B1**
(45) Veröffentlichungstag und Bekanntmachung des Hinweises auf die Patenterteilung: **01.05.2019**
(21) Anmeldenummer: 11764216.5
(22) Anmeldetag: 05.10.2011
(51) Int. Cl.: F23N 1/00, F16K 31/524, F16K 11/16, F16K 31/44, F16K 11/22, F16K 27/02

(54) **GASVENTILEINHEIT**
GAS VALVE UNIT
UNITÉ VANNE À GAZ

(30) Priorität: 15.10.2010 EP 10290559
(43) Veröffentlichungstag der Anmeldung: 16.10.2013
(73) Patentinhaber: BSH Hausgeräte GmbH, 81739 München (DE)
(72) Erfinder: NAUMANN, Jörn, 77770 Durbach (DE)
(86) Internationale Anmeldenummer: PCT/EP2011/067375
(87) Internationale Veröffentlichungsnummer: WO 2012/049049

(56) Entgegenhaltungen:
- WO-A1-99/11956
- JP-A- S5 312 528
- JP-U- S58 142 457

## Beschreibung

Die Erfindung betrifft eine Gasventileinheit zum Einstellen eines einem Gasbrenner eines Gasgeräts, insbesondere eines Gaskochgeräts, zugeführten Gasvolumenstroms, wobei die Gasventileinheit mindestens zwei Auf-Zu-Ventile aufweist.

Gasventileinheiten der genannten Art sind beispielweise in den Druckschriften EP 0 818 655 A2 und WO 2004/063629 A1 beschrieben. Mit derartigen Gasventileinheiten kann der einen Gasbrenner eines Gaskochgeräts zugeführte Gasvolumenstrom in mehreren Stufen gesteuert werden. Dabei besitzt der Gasvolumenstrom in jeder Stufe eine reproduzierbare Größe. Der Durchflussquerschnitt der Gasventileinheit insgesamt und folglich die Größe des Gasvolumenstroms werden eingestellt, indem bestimmte Auf-Zu-Ventile der Gasventileinheit geöffnet bzw. geschlossen werden und dadurch der Gasfluss durch bestimmte Drosselöffnungen freigegeben bzw. unterbrochen wird.

Bei den bekannten gattungsmäßigen Gasventileinheiten werden die Auf-Zu-Ventile einzeln elektromagnetisch betätigt. Hierzu ist jedem der Auf-Zu-Ventile ein eigener Elektromagnet zugeordnet, der das Auf-Zu-Ventil öffnet bzw. schließt. Die Ansteuerung der Elektromagnete erfolgt durch eine elektronische Steuereinheit. Diese elektronische Steuereinheit verarbeitet die von einer Bedienperson des Gaskochgeräts mittels eines elektrischen Bedienelements erzeugten Signale und steuert die Elektromagnete der Auf-Zu-Ventile entsprechend an.

Die WO 99/11956 A1 beschreibt eine Gasventileinheit für einen Gasbrenner, der mehrere Brennerringe aufweist. Mit Hilfe der Gasventileinheit ist ein Brenngasstrom zu jedem Brennerring individuell steuerbar.

Die JP S58-142457 U beschreibt eine Gasventileinheit mit mehreren Auf-Zu-Ventilen. Die Auf-Zu-Ventile sind in einem Ausgangszustand geöffnet. Mit Hilfe einer Betätigungsscheibe sind Ventilkörper der Auf-Zu-Ventile jeweils auf den Ventilkörpern zugeordnete Ventilsitze drückbar, um das entsprechende Auf-Zu-Ventil zu schließen.

Die JP S53-12528 A beschreibt ein Durchflussregelventil mit mehreren Auf-Zu-Ventilen. Die Auf-Zu-Ventile sind kumulativ zuschaltbar.

Der vorliegenden Erfindung liegt die Aufgabe zugrunde, eine einfacher gestaltete Gasventileinheit der eingangs genannten Art zur Verfügung zu stellen.

Diese Aufgabe wird erfindungsgemäß dadurch gelöst, dass die Auf-Zu-Ventile durch Bewegen von zumindest einem Körper relativ zu den Auf-Zu-Ventilen mechanisch betätigbar sind.

Gemäß einem ersten Aspekt der Erfindung wird eine Gasventileinheit zum Einstellen eines einem Gasbrenner eines Gasgeräts, insbesondere eines Gaskochgeräts, zugeführten Gasvolumenstroms vorgeschlagen, wobei die Gasventileinheit mindestens drei Auf-Zu-Ventile aufweist, wobei die mindestens drei Auf-Zu-Ventile durch Bewegen von zumindest einem Körper relativ zu den Auf-Zu-Ventilen mechanisch betätigbar sind und wobei der zumindest eine Körper und die Auf-Zu-Ventile derart ausgeführt sind, dass in Abhängigkeit von der Position des zumindest einen Körpers entweder kein Auf-Zu-Ventil oder genau ein Auf-Zu-Ventil oder genau zwei Auf-Zu-Ventile oder genau ein weiteres Auf-Zu-Ventil geöffnet sind.

Die Betätigung der Gasventileinheit erfolgt, indem die Lage oder die räumliche Ausrichtung des zumindest einen Körpers relativ zu den zu betätigenden Auf-Zu-Ventilen verändert wird.

Wenn die Bewegung des zumindest einen Körpers durch eine Bedienperson von Hand erfolgt, sind zum Schalten der Auf-Zu-Ventile keine elektrischen Komponenten erforderlich. Alternativ kann der zumindest eine Körper auch mittels eines beliebigen Stellglieds, beispielsweise eines Elektromotors, bewegt werden. Der Elektromotor wird dabei von einer elektrischen Steuereinheit angesteuert. Diese ermöglicht es, dieselbe Gasventileinheit wahlweise mechanisch durch die Bedienperson oder mittels eines elektrischen Stellglieds zu betätigen. Bei der Herstellung von Kochgeräten können baugleiche Gasventileinheiten sowohl mit mechanischen Benutzerschnittstellen, beispielsweise Drehknebeln, als auch mit elektrischen Benutzerschnittstellen, beispielsweise Touch-Sensoren, kombiniert werden.

Die Gasventileinheit ist insbesondere Teil eines handbetätigten Mehrfachstellgeräts, welches aus einem Ventilteil und einer adaptierten Zündsicherung besteht. In dem Ventilteil sind insbesondere ein Griff oder Drehknebel, Ventile, Düsen und Dichtungen integriert. Der Griff kann durch leichten Druck eingedrückt werden. Hierbei wird die Zündsicherung betätigt. Die Auf-Zu-Ventile werden in einem oder mehreren gasdichten Räumen durch ein bzw. mehrere federnde Bauteile auf Dichtungen gedrückt und verhindern somit den Durchfluss zu den dazugehörenden Öffnungen oder Dichtungsöffnungen. Die federnden Bauteile oder Federn finden ihren Gegenhalt in einem gasdicht angebrachten Deckel.

In einer bevorzugten Ausführungsform ist eine Mehrzahl N von Auf-Zu-Ventilen vorgesehen ist, wobei jedes Auf-Zu-Ventil einen bewegbaren Absperrkörper aufweist, der bei geschlossenem Auf-Zu-Ventil an einem Ventilsitz anliegt und dadurch eine Öffnung in den Ventilsitz verschließt.

Bevorzugt hat jedes Auf-Zu-Ventil eine Schließfeder, die bei geschlossenem Auf-Zu-Ventil den Absperrkörper auf den Ventilsitz drückt. Weiters hat jedes Auf-Zu-Ventil vorzugsweise eine entgegen der Schließfeder wirkende Öffnungsfeder. Insbesondere ist die Federkonstante der Schließfeder größer als die Federkonstante der Öffnungsfeder.

In einer bevorzugten Ausführungsform hat jedes Auf-Zu-Ventil einen Ansteuerbereich, durch welchen das Auf-Zu-Ventil mittels des zumindest einen Körpers betätigbar ist.

Der jeweilige Körper ist vorzugsweise als ein Mitnehmer ausgebildet ist. Der Mitnehmer ist insbesondere derart ausgestaltet, den Absperrkörper zum Öffnen des Auf-Zu-Ventils mittels einer durch den in den Ansteuerbereich eingreifenden Mitnehmer bewirkten Kraft entgegen der Kraft der Schließfeder von dem Ventilsitz abzuheben.

Der zumindest eine Körper und die Auf-Zu-Ventile sind derart ausgeführt, dass in Abhängigkeit von der Position des Körpers oder in Abhängigkeit von den Positionen der Körper entweder kein Auf-Zu-Ventil oder genau ein Auf-Zu-Ventil oder genau zwei Auf-Zu-Ventile geöffnet sind. Die Größe des jeweiligen Körpers und die möglichen Positionen des Körpers sind beispielsweise derart ausgelegt, dass der jeweilige Körper höchstens ein Auf-Zu-Ventil zu einem Zeitpunkt öffnen kann. In der Nullposition des drehbaren Bauteils ist kein Körpers über einem Auf-Zu-Ventil angeordnet.

Bevorzugt ist der zumindest eine Körper in Abhängigkeit eines Winkels eines drehbaren Bauteils über den in einer Reihe angeordneten Auf-Zu-Ventilen angeordnet.

In einer Ausführungsform sind die mindestens zwei Auf-Zu-Ventile durch Bewegen von zwei Körpern relativ zu den Auf-Zu-Ventilen mechanisch betätigbar.

Insbesondere ist ein erster Körper bei einem ersten Winkel des drehbaren Bauteils über dem ersten Auf-Zu-Ventil der Reihe der Auf-Zu-Ventile angeordnet.

Vorzugsweise bleibt ein zweiter Körper ab einem zweiten Winkel, der größer als der erste Winkel ist, über dem ersten Auf-Zu-Ventil angeordnet, und der erste Körper wird in

Abhängigkeit eines größer werdenden Winkels des drehbaren Bauteils über die auf das erste Auf-Zu-Ventil folgenden Auf-Zu-Ventile geführt.

In einer bevorzugten Ausführungsform ist der zweite Körper in Zusammenwirken mit dem ersten Auf-Zu-Ventil zur Bereitstellung einer Grundlast des Gasvolumenstroms eingerichtet. Der erste Körper ist in Zusammenwirken mit den weiteren Auf-Zu-Ventilen zur Bereitstellung einer jeweiligen Zusatzlast des Gasvolumenstroms eingerichtet.

Bevorzugt ist - wie oben ausgeführt - eine Mehrzahl N von Auf-Zu-Ventilen vorgesehen, wobei jedes Auf-Zu-Ventil einen bewegbaren Absperrkörper aufweist, der bei geschlossenem Auf-Zu-Ventil an einem Ventilsitz anliegt und dadurch eine Öffnung oder Ventilöffnung im Ventilsitz verschließt. Insbesondere haben die Öffnungen unterschiedliche Durchmesser. Bevorzugt haben die zweite bis n-te Öffnung ansteigende Durchmesser. Somit kann die zugeschaltete Zusatzlast je nach Drehwinkel vergrößert werden.

Wie oben bereits ausgeführt, weist jedes Auf-Zu-Ventil einen bewegbaren Absperrkörper auf, welcher bei geschlossenem Auf-Zu-Ventil an einem Ventilsitz anliegt und dadurch eine Öffnung im Ventilsitz verschließt. Bei geöffnetem Auf-Zu-Ventil wird die Öffnung im Ventilsitz von Gas durchströmt. Dieser Gasfluss wird unterbrochen, wenn der Absperrkörper des jeweiligen Auf-Zu-Ventils an dem Ventilsitz anliegt.

Vorzugsweise ist der Ventilsitz als im Wesentlichen ebene Fläche ausgeführt. Die ebene Fläche des Ventilsitzes bildet die Dichtfläche gegenüber dem jeweiligen Absperrkörper. Zur Herstellung des Ventilsitzes an sich sind damit keine mechanischen Bearbeitungsschritte erforderlich, wenn zur Herstellung des Ventilsitzes ein Plattenmaterial verwendet wird. In die ebene Fläche müssen dann nur die Öffnungen eingearbeitet werden. Alternativ kann der Ventilsitz als Formdichtung ausgebildet sein, wobei der Absperrkörper dann an seiner Dichtfläche plan ausgebildet ist. Der Vorteil dieser Variante ist, dass die Gefahr einer Beschädigung der Dichtkante am Absperrkörper verringert ist.

Mit besonderem Vorteil sind die Ventilsitze der mindestens zwei Auf-Zu-Ventile von einem gemeinsamen Bauteil gebildet. Dieses gemeinsame Bauteil kann als Ventildichtplatte ausgeführt sein und besitzt für jedes Auf-Zu-Ventil eine Öffnung oder Ventilöffnung und einen der Öffnung zugeordneten Ventilsitz. Insbesondere weist jedes Auf-Zu-Ventil eine Schließfeder auf, die bei geschlossenem Auf-Zu-Ventil den Absperrkörper auf den Ventilsitz drückt. Die Schließfeder erzeugt somit die Schließkraft des Auf-Zu-Ventils. Die Schließfeder stellt damit sicher, dass unabhängig von der Einbaulage der Gasventileinheit, z.B. auch dann, wenn die Gewichtskraft des Absperrkörpers der Kraft der Schließfeder entgegenwirkt, das Auf-Zu-Ventil sicher schließt.

Bevorzugt ist jeder Absperrkörper von einem im Wesentlichen zylindrischen Stößel gebildet. Der Absperrkörper weist an seinem dem Ventilsitz zugewandten Ende vorzugsweise eine ringförmige Dichtkante auf.

Jeder Absperrkörper ist in einem Ventilkörper der Gasventileinheit axial bewegbar geführt.

Eine besonders günstige Anordnung ist gegeben, wenn die Absperrkörper der einzelnen Auf-Zu-Ventile auf einer Kreisbahn um eine Achse der Gasventileinheit angeordnet sind und die Absperrkörper parallel zu dieser Achse bewegbar sind. Es entsteht hierdurch eine ringförmige Anordnung, bei der auch die Öffnungen der Ventildichtplatte auf einer Kreisbahn angeordnet sind. Die Bewegung der Absperrkörper erfolgt senkrecht zu der Ebene der Ventildichtplatte.

Zur Betätigung des jeweiligen Auf-Zu-Ventils ist die Position des zumindest einen Körpers relativ zu dem Absperrkörper des jeweiligen Auf-Zu-Ventils veränderbar. Der Ansteuerbereich wird von dem jeweiligen Körper dann betätigt, wenn sich der Ansteuerbereich oberhalb des jeweiligen Körpers befindet. Andernfalls ist das Auf-Zu-Ventil mittels der auf den Absperrkörper wirkenden Kraft der Schließfeder geschlossen.

Gemäß einem zweiten Aspekt der Erfindung wird eine Gasventileinheit zum Einstellen eines einem Gasbrenner eines Gasgeräts, insbesondere eines Gaskochgeräts, zugeführten Gasvolumenstroms vorgeschlagen, wobei die Gasventileinheit mindestens zwei Auf-Zu-Ventile aufweist, wobei die mindestens zwei Auf-Zu-Ventile durch Bewegen von zwei Körpern relativ zu den Auf-Zu-Ventilen mechanisch betätigbar sind.

In einer bevorzugten Ausführungsform sind die zwei Körper und die Auf-Zu-Ventile derart ausgeführt, dass in Abhängigkeit von den Positionen der beiden Körper entweder kein Auf-Zu-Ventil oder genau ein Auf-Zu-Ventil oder genau zwei Auf-Zu-Ventile geöffnet sind. Die Größe des jeweiligen Körpers und die möglichen Positionen des Körpers sind derart ausgelegt, dass der jeweilige Körper höchstens ein Auf-Zu-Ventil zu einem Zeitpunkt öffnen kann. In der Nullposition des drehbaren Bauteils ist kein Körper unter einem Auf-Zu-Ventil angeordnet.

Wird das drehbare Bauteil weiter gedreht, so dass der resultierende Winkel größer ist als der erste Winkel, so wird bei Erreichen eines zweiten Winkels der zweite Körper über dem ersten Auf-Zu-Ventil angeordnet und verbleibt auch bei weiterem Drehen des drehbaren Bauteils über diesem. Der erste Körper hingegen wird in Abhängigkeit des größer werdenden Winkels des drehbaren Bauteils über die auf das erste Auf-Zu-Ventil folgenden Auf-Zu-Ventile geführt. Folglich kann der zweite Körper in Zusammenwirken mit dem ersten Auf-Zu-Ventil eine Grundlast des Gasvolumenstromes bereitstellen. Der erste Körper kann in diesem Fall in Zusammenwirken mit den weiteren Auf-Zu-Ventilen eine jeweilige Zusatzlast des Gasvolumenstromes bereitstellen, je nachdem über welchem Auf-Zu-Ventil sich der Körper befindet.

Folgendes Beispiel mit fünf Auf-Zu-Ventilen und der Annahme, dass der (i+1)-te Winkel größer als der i-te Winkel ist, kann dies verdeutlichen. Bei einem ersten Winkel des drehbaren Bauteils ist der erste Körper über dem ersten Auf-Zu-Ventil. Folglich wird eine Grundlast bereitgestellt.

Bei einem zweiten Winkel des drehbaren Bauteils ist der erste Körper über dem zweiten Auf-Zu-Ventil und der zweite Körper ist über dem ersten Auf-Zu-Ventil. Bei einem dritten Winkel des drehbaren Bauteils sind der erste Körper über dem dritten Auf-Zu-Ventil und der zweite Körper über dem ersten Auf-Zu-Ventil. Folglich werden eine Grundlast mittels des ersten Auf-Zu-Ventils und eine Zusatzlast mittels des dritten Auf-Zu-Ventils bereitgestellt.

Bei einem vierten Winkel des drehbaren Bauteils sind der erste Körper über dem vierten Auf-Zu-Ventil und der zweite Körper über dem ersten Auf-Zu-Ventil. Analog sind bei einem fünften Winkel des drehbaren Bauteils der erste Körper über dem fünften Auf-Zu-Ventil und der zweite Körper über dem ersten Auf-Zu-Ventil.

Eine besonders zweckmäßige Ausgestaltung der Erfindung sieht vor, dass die beiden Körper an einem um die Achse der Gasventileinheit drehbaren Bauteil der Gasventileinheit angeordnet sind, wobei die Achse vorzugsweise von einer Schaltwelle der Gasventileinheit gebildet ist. Bei einem Drehen des drehbaren Bauteils werden die Körper auf einer Kreisbahn bewegt. Dabei wird allerdings der zweite, dem ersten Körper nachfolgende Körper nur bis zur Position über dem ersten Auf-Zu-Ventil bewegt. Der Durchmesser der Kreisbahn entspricht im Wesentlichen dem Durchmesser der Kreisbahn, in der sich die Absperrkörper befinden. Dies bedeutet, dass bei einem Drehen des drehbaren Bauteils der erste Körper über die Absperrkörper aller Auf-Zu-Ventile bewegt werden kann.

Eine besonders einfache Anordnung sieht vor, dass das drehbare Bauteil durch eine Bedienperson von Hand um die Achse drehbar ist. Dann sind keinerlei elektrische oder elektronische Bauteile erforderlich. Die Betätigung der Gasventileinheit erfolgt ausschließlich durch die manuelle Kraft der Bedienperson, welche die Körper relativ zu den Ansteuerbereichen der Auf-Zu-Ventile bewegen kann.

Ebenfalls ist es möglich, dass das drehbare Bauteil mittels eines elektrischen Stellglieds um die Achse drehbar ist. Für das elektrische Stellglied kommt insbesondere ein Elektromotor, beispielsweise ein Schrittmotor, zum Einsatz. Das Stellglied wird dabei von einer elektrischen Steuereinheit angesteuert, beispielsweise in Abhängigkeit von den Signalen einer elektrischen Benutzerschnittstelle oder in Abhängigkeit von automatisierten Funktionen, beispielsweise einer automatisierten Leistungsregulierung oder einer Abschaltautomatik.

Gemäß einem dritten Aspekt der Erfindung wird eine Gasventileinheit zum Einstellen eines einem Gasbrenner eines Gasgerätes, insbesondere eines Gaskochgerätes, zugeführten Gasvolumenstroms vorgeschlagen, wobei die Gasventileinheit eine Anzahl von Auf-Zu-Ventilen aufweist, wobei die Anzahl der Auf-Zu-Ventile durch eine mechanische Betätigung durch mindestens einen relativ zu den Auf-Zu-Ventilen bewegbaren Körper additiv zuschaltbar ist.

Bevorzugt sind der mindestens eine Körper und die Auf-Zu-Ventile derart ausgeführt, dass in Abhängigkeit von der Position des mindestens einen Körpers eine bestimmte Anzahl der Auf-Zu-Ventile geöffnet ist.

In einer bevorzugten Ausführungsform ist der mindestens eine Körper in Abhängigkeit eines Winkels eines drehbaren Bauteils über oder unter den in einer Reihe angeordneten Auf-Zu-Ventilen angeordnet.

Insbesondere ist eine der Anzahl der Auf-Zu-Ventile entsprechende Anzahl von Körpern vorgesehen ist, die dazu eingerichtet ist, die Anzahl der Auf-Zu-Ventile additiv zuzuschalten.

Alternativ kann der mindestens eine Körper als ein einziger Mitnehmer ausgeführt sein, welcher dazu eingerichtet ist, die Anzahl der Auf-Zu-Ventile additiv zuzuschalten.

Gemäß einem vierten Aspekt der Erfindung wird eine Gasventileinheit zum Einstellen von Gasvolumenströmen zu einem Zweikreis-Gasbrenner eines Gasgeräts, insbesondere eines Gaskochgeräts, vorgeschlagen, wobei die Gasventileinheit einen Gaseingang, zwei Gasausgänge und mindestens zwei Auf-Zu-Ventile aufweist, wobei der an einem ersten Gasausgang zugeführte Gasvolumenstrom und der an einem zweiten Gasausgang zugeführte Gasvolumenstrom mehrstufig einstellbar sind, wobei die mindestens zwei Auf-Zu-Ventile durch Bewegen von zumindest einem Körper relativ zu den Auf-Zu-Ventilen mechanisch betätigbar sind.

Gemäß einem fünften Aspekt der Erfindung wird eine Gasventileinheit zum Einstellen von Gasvolumenströmen zu einem Zweikreis-Gasbrenner eines Gasgeräts, insbesondere eines Gaskochgerätes, vorgeschlagen, wobei die Gasventileinheit einen Gaseingang, zwei Gasausgänge und mindestens zwei Auf-Zu-Ventile aufweist, wobei der Gasvolumenstrom zu zumindest einem der Gasausgänge mehrstufig einstellbar ist, in einer Nullstellung der Gasventileinheit der Gasvolumenstrom zu beiden Gasausgängen unterbrochen ist und in einer zur Nullstellung benachbarten Schaltstellung der mehrstufig einstellbare Gasvolumenstrom auf einen Maximalwert eingestellt ist, wobei die mindestens zwei Auf-Zu-Ventile durch Bewegen von zumindest einen Körper relativ zu den Auf-Zu-Ventilen mechanisch betätigbar sind.

Weitere Vorteile und Einzelheiten der Erfindung werden anhand der in den schematischen Figuren dargestellten Ausführungsbeispiele näher erläutert. Dabei zeigt:
- Fig. 1: eine schematische Schaltanordnung der Gasventileinheit mit geschlossenen Auf-Zu-Ventilen,
- Fig. 2: eine schematische Schaltanordnung der Gasventileinheit mit einem geöffneten ersten Auf-Zu-Ventil,
- Fig. 3: eine schematische Schaltanordnung der Gasventileinheit mit einem geöffneten ersten Auf-Zu-Ventil und einem geöffneten zweiten Auf-Zu-Ventil,
- Fig. 4: eine schematische Schaltanordnung der Gasventileinheit mit einem geöffneten zweiten Auf-Zu-Ventil, und
- Fig. 5: eine schematische Schaltanordnung der Gasventileinheit mit einem geöffneten fünften Auf-Zu-Ventil.

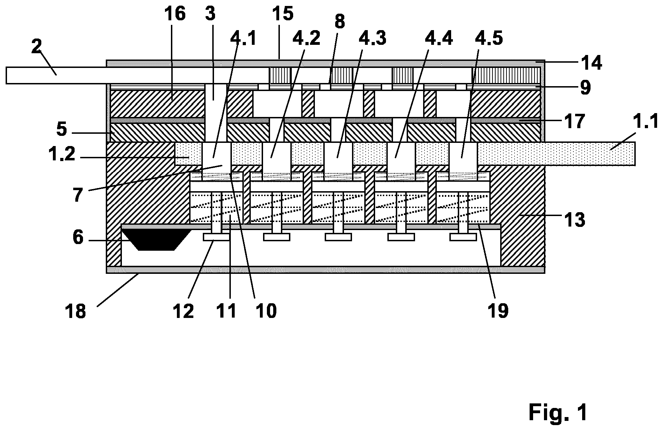

Die Fig. 1 bis 5 zeigen die Schaltanordnung der erfindungsgemäßen Gasventileinheit in aufeinanderfolgenden Schaltzuständen. Zu erkennen ist ein Gaseingang 1, mit dem die Gasventileinheit beispielsweise an eine Hauptgasleitung eines Gaskochgeräts angeschlossen ist. An dem Gaseingang 1.1 steht das zur Verbrennung vorgesehene Gas mit einem konstanten Druck, von beispielsweise 20 mbar oder 50 mbar. An einem Gasausgang 2 der Gasventileinheit wird eine beispielsweise zu einem Gasbrenner des Gaskochgeräts führende Gasleitung angeschlossen. Der Gaseingang 1.1 ist über einen Gasausgangsraum 3 der Gasventileinheit mit der Eingangsseite der im vorliegenden Ausführungsbeispiel fünf Auf-Zu-Ventilen 4 (4.1 bis 4.5) verbunden. Durch Öffnen der Auf-Zu-Ventile 4 ist der Gaseingang 1.1 jeweils mit dem Gasausgangsraum 3 verbunden. Zwischen einem Gaseingangsraum 1.2 und dem Gasausgangsraum 3 ist eine Dichtplatte oder Ventildichtplatte 5 angeordnet.

Die Auf-Zu-Ventile 4 sind durch Bewegen eines Mitnehmers 6 relativ zu den Auf-Zu-Ventilen 4 mechanisch betätigbar.

Dabei sind der Mitnehmer 6 und die Auf-Zu-Ventile 4 derart ausgeführt, dass in Abhängigkeit von der Position des Mitnehmers 6 entweder kein Auf-Zu-Ventil 4 oder genau ein Auf-Zu-Ventil 4 oder genau zwei Auf-Zu-Ventile 4 geöffnet ist.

Hierzu ist im jeweiligen Auf-Zu-Ventil 4.1 bis 4.5 eine Öffnung 8 in einer Düsenplatte 9 zugeordnet. Bei geöffnetem Auf-Zu-Ventil 4.1 bis 4.5 kann Gas von dem Gaseingangsraum 1.2 zu dem Gasausgangsraum 3 gelangen.

Die Ventilsitze der Auf-Zu-Ventile 4.1 bis 4.5 sind vorzugsweise von einem gemeinsamen Bauteil gebildet. Dieses gemeinsame Bauteil ist beispielsweise die Ventildichtplatte 5.

Jedes Auf-Zu-Ventil 4.1 bis 4.5 hat eine Schließfeder 11, welche bei geschlossenem Auf-Zu-Ventil 4.1 bis 4.5 einen Absperrkörper 7 auf den Ventilsitz drückt. Der bewegbare Absperrkörper 7 liegt bei geschlossenem Auf-Zu-Ventil 4 an dem Ventilsitz an. Der Absperrkörper 7 ist beispielsweise von einem im Wesentlichen zylindrischen Stößel gebildet. Ferner hat jedes Auf-Zu-Ventil 4.1 bis 4.5 eine Öffnungsfeder 10, die entgegen der Schließfeder 11 wirkt

Weiter hat jedes Auf-Zu-Ventil 4.1 bis 4.5 einen Ansteuerbereich 12, durch welchen das Auf-Zu-Ventil 4.1 bis 4.5 mittels des Mitnehmers 6 betätigbar ist.

Das Ventilgehäuse 13 der Gasventileinheit besteht im Wesentlichen aus einem Griffschaft (nicht gezeigt), einer Abdeckplatte 14 und einem Dichtungs-Düsenplatte-Verbundsystem. Das Dichtungs-Düsenplatte-Verbundsystem setzt sich zusammen aus einer oberen Gasverteilungsdichtung 15, der Düsenplatte 9, einer unteren Gasverteilungsdichtung 16, einer Druckplatte 17 und der Dichtplatte 5.

Der Griffschaft ist drehbar und kann durch leichten Druck eingedrückt werden. Das Dichtungs-Düsenplatte-Verbundsystem liegt auf der dem Griffschaft zugewandten Seite und ist in einer Abdeckplatte 14 integriert, wobei das Dichtungs-Düsenplatte-Verbundsystem zur entgegengesetzten Griffschaftseite weist.

Mit Hilfe der Abdeckplatte 14 wird auch der Griffschaft geführt. Die Abdeckplatte 14 mit dem Dichtungs-Düsenplatte-Verbundsystem ist vorzugsweise als abnehmbare Trennstelle am Ventilgehäuse 13 ausgebildet. Die Schließfedern 11 finden ihren Gegenhalt an einer Druckscheibe 19. Den Schließfedern 11 gegenüberliegend sind Öffnungsfedern 10 angeordnet. Die Öffnungsfedern 10 stützen sich am Ventilgehäuse 13 ab und wirken den Schließfedern 11 mit einer wesentlich kleineren Kraft entgegen.

Die Absperrkörper oder Ventilkörper 7 durchdringen die Druckscheibe 19 mit ihrem Ansteuerbereich 12. Auf der Druckscheibe 19 wird durch den Griffschaft der Mitnehmer 6 verschoben, so dass der Mitnehmer 6 mit dem Ansteuerbereich 12 des jeweiligen Auf-Zu-Ventils 4.1 bis 4.5 Kontakt hat und diese öffnen oder schließen kann. Diese Seite des Ventilgehäuses 13 wird von der gasdichten Ventilgehäuseabdeckung 18 verschlossen und liegt somit auf der gegenüberliegenden Seite des Griffschafts. In den Darstellungen der Fig. 1 bis 5 ist das Gehäuse 13 als Abwicklung dargestellt. Der Griffschaft entfällt bei dieser Darstellung, weil er zentral angeordnet ist. Der sichtbare Griffschaftbereich ist oberhalb der Abdeckplatte 14 angeordnet.

Dabei ist der Mitnehmer 6 derart ausgebildet, den Absperrkörper zum Öffnen des Auf-Zu-Ventils 4.1 bis 4.5 mittels einer durch den in den Ansteuerbereich 12 eingreifenden Mitnehmer 6 bewirkten Kraft entgegen der Kraft der Schließfeder 11 von dem Ventilsitz abzuheben. Die Absperrkörper 7 der Auf-Zu-Ventile 4.1 bis 4.5 sind vorzugsweise auf einer Kreisbahn um eine Achse der Gasventileinheit angeordnet. Die Absperrkörper 7 sind parallel zu dieser Achse bewegbar.

Zur Betätigung der Auf-Zu-Ventile 4.1 bis 4.5 ist die Position des Mitnehmers 6 relativ zu den Absperrkörpern der Auf-Zu-Ventile 4.1 bis 4.5 veränderbar. Insbesondere ist dabei der Mitnehmer 6 in Abhängigkeit eines Winkels eines drehbaren Bauteils unter den in einer Reihe angeordneten Auf-Zu-Ventilen 4.1 bis 4.5 angeordnet.

In der Schaltstellung gemäß Fig. 1 ist der Mitnehmer 6 in der Nullposition und keines der Auf-Zu-Ventile 4.1 bis 4.5 geöffnet. Somit kann kein Gas von dem Gaseingangsraum 1.2 zu dem Gasausgangsraum 3 strömen. Alle Auf-Zu-Ventile 4.1 bis 4.5 dichten auf der Ventildichtplatte 5 ab.

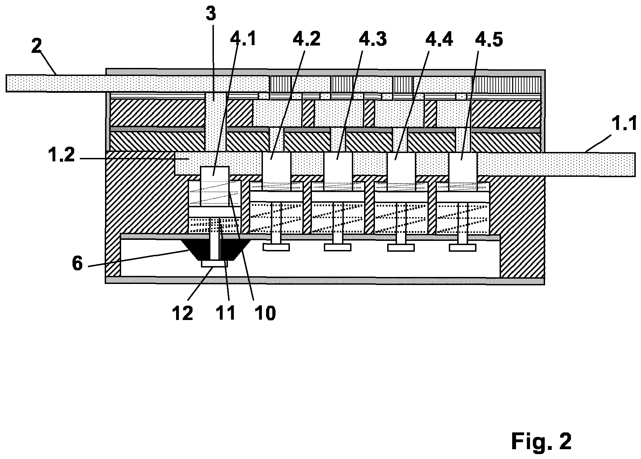

Wenn der Mitnehmer 6 aus der Nullposition verschoben wird, so nähert er sich dem ersten Auf-Zu-Ventil 4.1 und bewirkt dort durch den Kontakt mit dem Ansteuerbereich 12 des ersten Auf-Zu-Ventils 4.1, dass der Absperrkörper 7 des ersten Auf-Zu-Ventils 4.1 von der Dichtplatte 9 getrennt wird. Der Gasweg in Richtung des Gasausgangsraums 3 und damit in Richtung des Gasausgangs 2 ist dann offen. Dies ist in Fig. 2 dargestellt. Im dargestellten Beispiel der Fig. 1 bis 5 entspricht der Zustand des offenen ersten Auf-Zu-Ventils 4.1 der Vollbrandposition, weil bei dieser Anordnung mit dem geringsten Druckverlust zu rechnen ist.

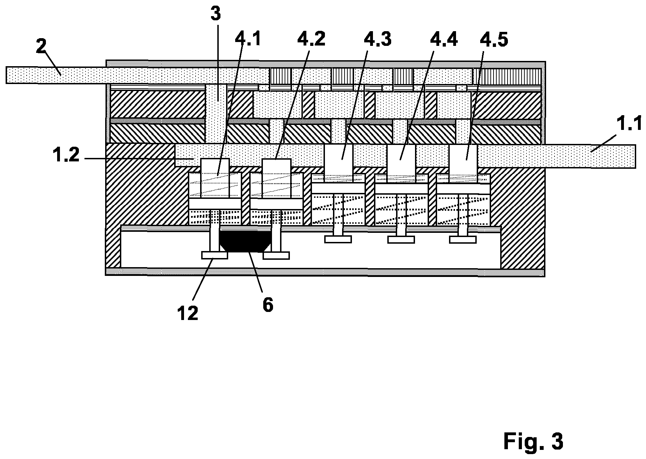

Wenn der Mitnehmer 6 weiter verschoben wird, so nähert er sich dem zweiten Auf-Zu-Ventil 4.2 und bewirkt dort durch den Kontakt mit dem Ansteuerbereich des zweiten Auf-Zu-Ventils 4.2, dass auch dieses von der Dichtplatte 9 getrennt wird. In diesem Moment sind beide Auf-Zu-Ventile 4.1 und 4.2 geöffnet (siehe Fig. 3). Eine Durchflussänderung erfolgt vorzugsweise noch nicht, weil der Druckverlust, der durch die Düsenöffnung des zweiten Auf-Zu-Ventils 4.2 erfolgt, größer ist als es bei dem ersten Auf-Zu-Ventil 4.1 der Fall ist.

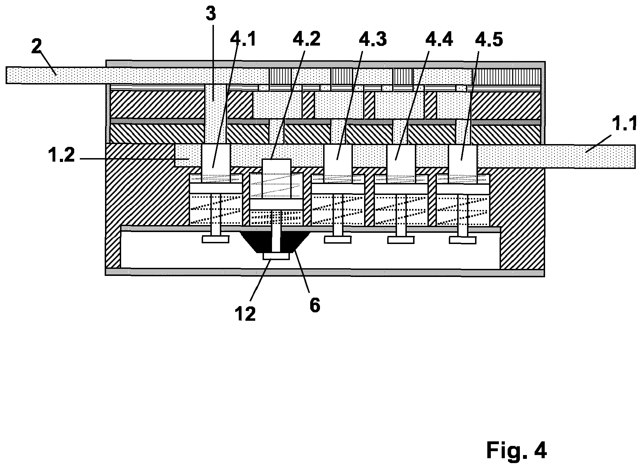

Wenn der Mitnehmer 6 mit Bezug zu Fig. 4 weiter verschoben wird, so verliert der Mitnehmer 6 seinen Kontakt mit dem Ansteuerbereich 12 des ersten Auf-Zu-Ventils 4.1. Dies hat zur Folge, dass die Schließfeder 11 das erste Auf-Zu-Ventil 4.1 wieder schließt, so dass der Absperrkörper 7 des ersten Auf-Zu-Ventils 4.1 wieder auf der Dichtplatte 5 abdichtet. Erst in diesem Moment erfolgt die verminderte Durchflussänderung über das zweite Auf-Zu-Ventil 4.2 (siehe Fig. 4).

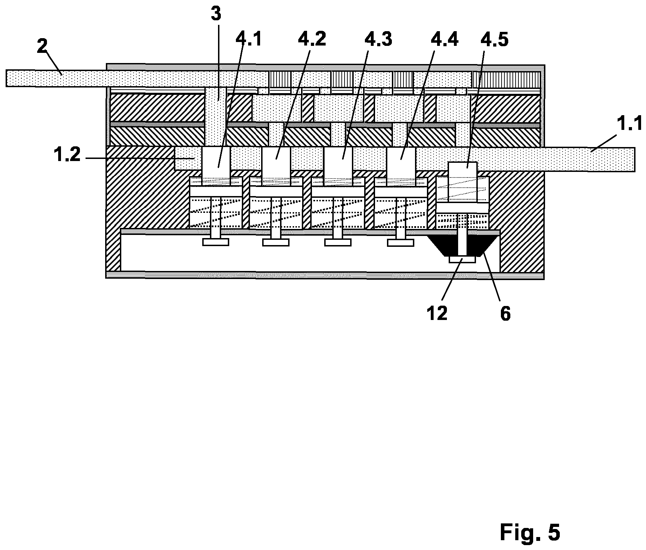

Wenn der Mitnehmer 6 im Weiteren bis zum fünften Auf-Zu-Ventil 4.5 verschoben ist und nur noch dieser geöffnet ist (siehe Fig. 5), dann erfolgt in dieser Position die kleinstmögliche Durchflussmenge, weil die nachfolgende Düsenöffnung, die vom fünften Auf-Zu-Ventil 4.5 freigegeben wird, vorzugsweise einen kleinsten Durchflussquerschnitt hat. Die Düsenöffnungen, welche in Reihe von dem Gasstrom in Richtung des Gasausgangs 2 weiter durchflossen werden, weisen vorzugsweise alle einen größeren Düsenquerschnitt auf, so dass keine weitere Durchflussmengenreduzierung erfolgen kann. Dadurch, dass alle Auf-Zu-Ventile 4.1 bis 4.5 parallel zueinander angeordnet sind, zeitversetzt öffnen oder schließen, ist das Gas gezwungen, alle Öffnungen 8 in der Düsenplatte 9 bis zum Gasausgang 2 in Reihe zu durchlaufen. Durch diese Anordnung kommt es im Augenblick des jeweiligen Schaltvorgangs der Auf-Zu-Ventile 4.1 bis 4.5 zu keinem Überschwingen oder Unterschwingen des Durchflusses.

Bei der vorliegenden Gasventileinheit fließt das Gas stets zuerst durch das parallel angeordnete Auf-Zu-Ventil und dann durch die in Reihe geschalteten Düsenöffnungen.

Die obigen Schaltzustände der Fig. 1 bis 5 sind vorteilhafterweise exakt reproduzierbar. Die Schaltzustände sind exakt reproduzierbar, selbst für kleinste Durchflussmengen bei maximalem Anschlussdruck, ohne dass es zu einem Überschwingen oder Unterschwingen der gewünschten Leistungsstufe kommt.

Bei den Schaltvorgängen der Auf-Zu-Ventile ist kein Fett erforderlich, so dass es zu keiner Verschiebung der Schaltpunkte kommen kann.

Die mechanisch schaltende Gasventileinheit kann von Hand bedient werden. Eine Elektronik ist nicht erforderlich, ein motorischer Antrieb kann aber eingesetzt werden.

Durch die erfindungsgemäße Anordnung ist ein Drehweg von ca. 320° bereitgestellt. Der Ventilblock kann als Ring oder auch als Schieber ausgebildet werden. Die vorliegende Gasventileinheit ist für jede Gasart, auch für Flüssiggas, einsetzbar.

Ferner gibt es Varianten der Gasventileinheit, bei welchen in den einzelnen Schaltstufen variierende Gasmengen gegenüber einer Grundlast erreicht werden können. In Abhängigkeit der Ausgestaltung der Öffnungsquerschnitte ist auch eine stetig ansteigende Gasmenge gegenüber der Grundlast darstellbar. Des Weiteren ist selbst ein Zickzackprofil für die bereitgestellte Gasmenge möglich.

Ferner kann auch bei einigen Ausführungsformen der Gasventileinheit der Aufbau der Auf-Zu-Ventile ab der Dichtplatte in Strömungsrichtung gesehen sehr einfach gestaltet werden, da eine Doppellochung der Düsenplatte und weitere Gasverteilungsplatten entfallen können.

### Bezugszeichenliste

- 1.1: Gaseingang
- 1.2: Gaseingangsraum
- 2: Gasausgang
- 3: Gaseingangsraum
- 4: Auf-Zu-Ventil
- 5: Ventildichtplatte
- 6: Mitnehmer
- 7: Absperrkörper
- 8: Öffnung
- 9: Düsenplatte
- 10: Öffnungsfeder
- 11: Schließfeder
- 12: Ansteuerbereich
- 13: Ventilgehäuse
- 14: Abdeckplatte
- 15: obere Gasverteilungsdichtung
- 16: untere Gasverteilungsdichtung
- 17: Druckplatte
- 18: Abdeckung
- 19: Druckscheibe

## Patentansprüche

1. Gasventileinheit zum Einstellen eines einem Gasbrenner eines Gasgeräts, insbesondere eines Gaskochgeräts, zugeführten Gasvolumenstroms, wobei die Gasventileinheit mindestens drei Auf-Zu-Ventile (4.1, 4.2, 4.3) aufweist, wobei die mindestens drei Auf-Zu-Ventile (4.1, 4.2, 4.3) durch Bewegen von zumindest einem Körper (6) relativ zu den Auf-Zu-Ventilen (4.1, 4.2, 4.3) mechanisch betätigbar sind und wobei der zumindest eine Körper (6) und die Auf-Zu-Ventile (4.1, 4.2, 4.3) derart ausgeführt sind, dass in Abhängigkeit von der Position des zumindest einen Körpers (6) entweder kein Auf-Zu-Ventil (4.1, 4.2, 4.3) oder genau ein Auf-Zu-Ventil (4.1) oder genau zwei Auf-Zu-Ventile (4.1, 4.2) oder genau ein weiteres Auf-Zu-Ventil (4.2) geöffnet sind.

2. Gasventileinheit nach Anspruch 1, **dadurch gekennzeichnet, dass** eine Mehrzahl N von Auf-Zu-Ventilen (4.1 bis 4.5) vorgesehen ist, wobei jedes Auf-Zu-Ventil (4) einen bewegbaren Absperrkörper (7) aufweist, der bei geschlossenem Auf-Zu-Ventil (4) an einem Ventilsitz anliegt und dadurch eine Öffnung (8) verschließt.

3. Gasventileinheit nach Anspruch 1 oder 2, **dadurch gekennzeichnet, dass** jedes Auf-Zu-Ventil (4) eine Schließfeder (11), die bei geschlossenem Auf-Zu-Ventil (4) den Absperrkörper (7) auf den Ventilsitz drückt, und eine entgegen der Schließfeder (11) wirkende Öffnungsfeder (10) aufweist.

4. Gasventileinheit nach Anspruch 3, **dadurch gekennzeichnet, dass** jedes Auf-Zu-Ventil (4) einen Ansteuerbereich (12) aufweist, durch welchen das Auf-Zu-Ventil (4) mittels des zumindest einen Körpers (6) betätigbar ist.

5. Gasventileinheit nach Anspruch 3 oder 4, **dadurch gekennzeichnet, dass** der jeweilige Körper (6) als ein Mitnehmer ausgebildet ist, welcher derart ausgestaltet ist, den Absperrkörper (7) zum Öffnen des Auf-Zu-Ventils (4) mittels einer durch den in den Ansteuerbereich (12) eingreifenden Mitnehmer (6) bewirkten Kraft entgegen der Kraft der Schließfeder (11) von dem Ventilsitz abzuheben.

6. Gasventileinheit nach einem der Ansprüche 1 - 5, **dadurch gekennzeichnet, dass** der zumindest eine Körper (6) in Abhängigkeit eines Winkels eines drehbaren Bauteils über den in einer Reihe angeordneten Auf-Zu-Ventilen (4) angeordnet ist.

7. Gasventileinheit nach Anspruch 6, **dadurch gekennzeichnet, dass** ein erster Körper bei einem ersten Winkel des drehbaren Bauteils über dem ersten Auf-Zu-Ventil (4.1) der Reihe der Auf-Zu-Ventile (4.1 bis 4.5) angeordnet ist.

8. Gasventileinheit nach Anspruch 6 oder 7, **dadurch gekennzeichnet, dass** ein zweiter Körper ab einem zweiten Winkel, der größer als der erste Winkel ist, über dem ersten Auf-Zu-Ventil (4.1) angeordnet bleibt und der erste Körper in Abhängigkeit eines größer werdenden Winkels des drehbaren Bauteils über die auf das erste Auf-Zu-Ventil (4.1) folgenden Auf-Zu-Ventile (4.2 bis 4.5) geführt wird.

9. Gasventileinheit nach Anspruch 8, **dadurch gekennzeichnet, dass** der zweite Körper in Zusammenwirken mit dem ersten Auf-Zu-Ventil (4.1) zur Bereitstellung einer Grundlast des Gasvolumenstroms eingerichtet ist und der erste Körper in Zusammenwirken mit den weiteren Auf-Zu-Ventilen (4.2 bis 4.5) zur Bereitstellung einer jeweiligen Zusatzlast des Gasvolumenstroms eingerichtet ist.

10. Gasventileinheit nach einem der Ansprüche 2 bis 9, **dadurch gekennzeichnet, dass** die Öffnungen (8) unterschiedliche Durchmesser aufweisen.

11. Gasventileinheit nach einem der Ansprüche 2 bis 10, **dadurch gekennzeichnet, dass** die zweite bis n-te Öffnung (8) einen der Reihe nach zunehmenden Öffnungsquerschnitt aufweisen.

12. Gasventileinheit nach einem der Ansprüche 2 bis 11, **dadurch gekennzeichnet, dass** die Ventilsitze der Auf-Zu-Ventile (4) von einem gemeinsamen Bauteil gebildet sind, welches vorzugsweise von einer Ventildichtplatte (9) gebildet ist.

13. Gasventileinheit nach einem der Ansprüche 2 bis 12, **dadurch gekennzeichnet, dass** die Absperrkörper (7) der einzelnen Auf-Zu-Ventile (4) auf einer Kreisbahn um eine Achse der Gasventileinheit angeordnet sind und die Absperrkörper (7) parallel zu dieser Achse bewegbar sind, wobei die Achse vorzugsweise von einer Schaltwelle der Gasventileinheit gebildet ist.

14. Gasarmatur mit zumindest einer Gasventileinheit nach einem der Ansprüche 1 bis 13.

15. Gasgerät, insbesondere Gaskochfeld, welches eine Gasarmatur nach Anspruch 14 aufweist.

## Claims

1. Gas valve unit for setting a gas volumetric flow supplied to a gas burner of a gas appliance, in particular a gas cooking appliance, wherein the gas valve unit has at least three on/off valves (4.1, 4.2, 4.3), wherein the at least three on/off valves (4.1, 4.2, 4.3) can be actuated mechanically by moving at least one body (6) relative to the on/off valves (4.1, 4.2, 4.3) and wherein the at least one body (6) and the on/off valves (4.1, 4.2, 4.3) are embodied in such a manner that either no on/off valve (4.1, 4.2, 4.3) or just one on/off valve (4.1) or just two on/off valves (4.1, 4.2) or just one further on/off valve (4.2) are opened as a function of the position of the at least one body (6).

2. Gas valve unit according to claim 1, **characterised in that** a plurality N of on/off valves (4.1 to 4.5) is provided, each on/off valve (4) having a movable blocking body (7), which rests on a valve seat when the on/off valve (4) is closed, thereby closing off an opening (8).

3. Gas valve unit according to claim 1 or 2, **characterised in that** each on/off valve (4) has a closing spring (11), which presses the blocking body (7) onto the valve seat when the on/off valve (4) is closed, and an opening spring (10) acting counter to the closing spring (11).

4. Gas valve unit according to claim 3, **characterised in that** each on/off valve (4) has an activation region (12), by way of which the on/off valve (4) can be actuated by means of the at least one body (6).

5. Gas valve unit according to claim 3 or 4, **characterised in that** the respective body (6) is configured as a carrier, which is embodied to raise the blocking body (7) from the valve seat counter to the force of the closing spring (11) by means of a force brought about by the carrier (6) engaging in the activation region (12) to open the on/off valve (4).

6. Gas valve unit according to one of claims 1 - 5, **characterised in that** the at least one body (6) is disposed above the on/off valves (4), which are disposed in a line, as a function of an angle of a rotatable component.

7. Gas valve unit according to claim 6, **characterised in that** a first body is disposed above the first on/off valve (4.1) of the line of on/off valves (4.1 to 4.5) when the rotatable component is at a first angle.

8. Gas valve unit according to claim 6 or 7, **characterised in that** a second body remains above the first on/off valve (4.1) from a second angle, which is greater than the first angle, and the first body is moved above the on/off valves (4.2 to 4.5) following the first on/off valve (4.1) as a function of an increasing angle of the rotatable component.

9. Gas valve unit according to claim 8, **characterised in that** the second body is set up to interact with the first on/off valve (4.1) to supply a base load of the gas volumetric flow and the first body is set up to interact with the further on/off valves (4.2 to 4.5) to supply a respective supplementary load of the gas volumetric flow.

10. Gas valve unit according to one of claims 2 to 9, **characterised in that** the openings (8) have different diameters.

11. Gas valve unit according to one of claims 2 to 10, **characterised in that** the second to nth openings (8) have an opening cross section that increases along the line.

12. Gas valve unit according to one of claims 2 to 11, **characterised in that** the valve seats of the on/off valves (4) are formed by a common component, which is preferably formed by a valve sealing plate (9).

13. Gas valve unit according to one of claims 2 to 12, **characterised in that** the blocking bodies (7) of the individual on/off valves (4) are disposed on a circular path around an axis of the gas valve unit and the blocking bodies (7) can be moved parallel to said axis, with the axis preferably being formed by a switching shaft of the gas valve unit.

14. Gas fitting having at least one gas valve unit according to one of claims 1 to 13.

15. Gas appliance, in particular a gas cooktop, which has a gas fitting according to claim 14.

## Revendications

1. Unité de vannes à gaz pour le réglage d'un débit volumique de gaz alimentant un brûleur à gaz d'un appareil à gaz, en particulier d'un appareil de cuisson à gaz, dans laquelle l'unité de vannes à gaz présente au moins trois vannes d'ouverture/fermeture (4.1, 4.2, 4.3), dans laquelle les au moins trois vannes d'ouverture/fermeture (4.1, 4.2, 4.3) sont actionnables mécaniquement en déplaçant au moins un corps (6) par rapport aux vannes d'ouverture/fermeture (4.1, 4.2, 4.3) et dans laquelle l'au moins un corps (6) et les vannes d'ouverture/fermeture (4.1, 4.2, 4.3) sont exécutées de telle sorte qu'en fonction de la position de l'au moins un corps (6) soit aucune vanne d'ouverture/fermeture (4.1, 4.2, 4.3) ou précisément une vanne d'ouverture/fermeture (4.1) ou précisément deux vannes d'ouverture/fermeture (4.1, 4.2) ou précisément une vanne d'ouverture/fermeture supplémentaire (4.2) sont ouvertes.

2. Unité de vannes à gaz selon la revendication 1, **caractérisée en ce qu'**une pluralité N de vannes d'ouverture/fermeture (4.1 à 4.5) est prévue, dans laquelle chaque vanne d'ouverture/fermeture (4) présente un corps d'arrêt mobile (7) contigu à un siège de vanne lorsque la vanne d'ouverture/fermeture (4) est fermée et qui obture ce faisant un orifice (8).

3. Unité de vannes à gaz selon la revendication 1 ou 2, **caractérisée en ce que** chaque vanne d'ouverture/fermeture (4) présente un ressort de fermeture (11) qui presse le corps d'arrêt (7) sur le siège de vanne lorsque la vanne d'ouverture/fermeture (4) est fermée et présente un ressort d'ouverture (10) agissant à l'encontre du ressort de fermeture (11).

4. Unité de vannes à gaz selon la revendication 3, **caractérisée en ce que** chaque vanne d'ouverture/fermeture (4) présente une zone d'actionnement (12) via laquelle la vanne d'ouverture/fermeture (4) est actionnable au moyen de l'au moins un corps (6).

5. Unité de vannes à gaz selon la revendication 3 ou 4, **caractérisée en ce que** le corps respectif (6) est exécuté sous la forme d'un entraîneur aménagé de sorte à soulever le corps d'arrêt (7) du siège de vanne pour l'ouverture de la vanne d'ouverture/fermeture (4) au moyen d'une force appliquée par l'entraîneur (6) dans la zone d'actionnement (12) à l'encontre de la force du ressort de fermeture (11).

6. Unité de vannes à gaz selon l'une des revendications 1 à 5, **caractérisée en ce que** l'au moins un corps (6) est disposé par-dessus les vannes d'ouverture/fermeture (4) disposées en ligne, en fonction d'un angle d'un composant rotatif.

7. Unité de vannes à gaz selon la revendication 6, **caractérisée en ce qu'**un premier corps est disposé par-dessus la première vanne d'ouverture-fermeture (4.1) de la série des vannes d'ouverture-fermeture (4.1 à 4.5) en présence d'un premier angle du composant rotatif.

8. Unité de vannes à gaz selon la revendication 6 ou 7, **caractérisée en ce qu'**un deuxième corps demeure disposé par-dessus la première vanne d'ouverture/fermeture (4.1) à partir d'un deuxième angle supérieur au premier angle et le premier corps est mené en fonction d'un angle croissant du composant rotatif par-dessus les vannes d'ouverture/fermeture (4.2 à 4.5) suivant la première vanne d'ouverture/fermeture (4.1).

9. Unité de vannes à gaz selon la revendication 8, **caractérisée en ce que** le deuxième corps est aménagé en coopération avec la première soupape d'ouverture/fermeture (4.1) pour la mise à disposition d'une charge de base du débit volumique de gaz et le premier corps est aménagé en coopération avec les vannes d'ouverture/fermeture supplémentaires (4.2 à 4.5) pour la mise à disposition d'une charge supplémentaire respective du débit volumique de gaz.

10. Unité de vannes à gaz selon l'une des revendications 2 à 9, **caractérisée en ce que** les orifices (8) présentent des diamètres différents.

11. Unité de vannes à gaz selon l'une des revendications 2 à 10, **caractérisée en ce que** la section d'orifice croît du deuxième au n-ième orifice (8) de la ligne.

12. Unité de vannes à gaz selon l'une des revendications 2 à 11, **caractérisée en ce que** les sièges de vanne des vannes d'ouverture/fermeture (4) sont constitués par un composant commun, lequel est de préférence constitué par une plaque d'étanchéité pour vanne (9).

13. Unité de vannes à gaz selon l'une des revendications 2 à 12, **caractérisée en ce que** les corps d'arrêt (7) des diverses vannes d'ouverture/fermeture (4) sont disposés en orbite autour d'un axe de l'unité de vannes à gaz et les corps d'arrêt (7) sont mobiles parallèlement à cet axe, l'axe étant de préférence constitué par un arbre de commande de l'unité de vannes à gaz.

14. Robinetterie à gaz avec au moins une unité de vannes à gaz selon l'une des revendications 1 à 13.

15. Appareil à gaz, en particulier champ de cuisson à gaz, présentant une robinetterie à gaz selon la revendication 14.
